(19)

Europäisches Patentamt
European Patent Office
Office européen des brevets

(11) **EP 2 490 088 A2**

(12) **EUROPEAN PATENT APPLICATION**

(43) Date of publication:
    **22.08.2012 Bulletin 2012/34**

(51) Int Cl.:
    ***G05B 19/042*** (2006.01)

(21) Application number: **12155679.9**

(22) Date of filing: **15.02.2012**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **17.02.2011 US 201113030033**

(71) Applicant: **Invensys Systems, Inc.
    Foxboro, MA 02035 (US)**

(72) Inventors:
    • **Bass, Lawrence T.
    West Greenwich,
    RI Rhode Island 02817-6012 (US)**

    • **Brown, Larry K.
    Bellingham,
    MA Massachusetts 02019 (US)**
    • **Ferreira, David A.
    Hope,
    RI Rhode Island 02831-1867 (US)**

(74) Representative: **Friese, Martin et al
    Andrae Flach Haug
    Balanstrasse 55
    81541 München (DE)**

(54) **Distributed proportional/integral/derivative tuning**

(57)     A system and method for implementing a Proportional/Integral/Derivative (PID) tuning cycle in a distributed control system comprising a PID block on a field device collecting loop characteristics of a control loop. The PID block may communicate the collected loop characteristics from the field device to a host computer in the distributed control system. The host computer may calculate a new tuning constant based on the received loop characteristics and communicate the new tuning constant to the PID block on the field device. The PID block on the field device may receive the new tuning constant for the PID block from the host computer. The PID block on the field device may be tuned with the new tuning constant.

EP 2 490 088 A2

**Description**

BACKGROUND

Distributed control systems typically include host computers coupled to controllers over a communication link, such as Ethernet. The host computers enable end-users to configure, monitor, initiate, and terminate control operations of a controlled process through interaction with the controllers. The controllers typically execute one or more control applications that sample values from field devices and provide outputs to actuate field devices so as to enable the control operations of the controlled process. The controllers are generally close to a controlled process and are coupled via communication busses to field devices such as valves or sensors that are distributed throughout the controlled process. The controllers may communicate with the field devices over communication busses according to open communication protocols such as FOUNDATION™ Fieldbus, HART®, PROFIBUS®, WORLDFIM®, Device-Net®, CAN.

FOUNDATION™ Fieldbus is defined in the group of specifications under FF-007 and complies with the IEC-61158, and ANSI/ISA-SP50.02 standards to provide control in the field, which are all incorporated by reference herein in their entirety. FOUNDATION™ Fieldbus provides three different types of blocks for enabling control in the field: resource blocks, transducer blocks, and function blocks. As used herein, the term "block" refers to a processing unit that is configured to perform a particular functionality or set of functionality in conjunction with a field device or other device of a distributed control system. In some embodiments a block may be implemented as a software application that is stored on a non-transitory computer readable medium of a field device or other device of a distributed control system and executable by a processor on the field device or other device of a distributed control system to provide control functionality to the field device. In some embodiments, such as where a particular solution is a stable solution, a block may be implemented as an application specific integrated circuit (ASIC) as would be understood by those of ordinary skill in the art.

Resource blocks define the characteristics of a resource, such as a device type, serial number, and resource state. Transducer blocks provide a layer of abstraction between the underlying hardware details of field devices and function blocks that may be stored and executed on the field devices. The transducer blocks may specify the I/O characteristics of a field device so as to enable sampling from (e.g., read a sensor value) and/or manipulating (e.g., activate an actuator) the underlying hardware of field devices. Function blocks are basic functions that are the building blocks used to define a control loop.

Function blocks may include an analog input (AI) block, an analog output (AO) block, and a Proportional/Integral/Derivative (PID) block, among others. The AI block may read data from a single analog input channel, sometimes through the use of a transducer block that defines the input characteristics of the analog input channel. Similarly, the AO block may write data to an analog output channel, sometimes through the use of a transducer block that defines the output characteristics of the output channel. The PID block implements a PID control algorithm. The PID block may receive an input of a process variable from an AI block and calculate a PID output to be output through an AO block to actuate a device (e.g., a valve) in the controlled process. By providing the interaction between the AI, PID, and AO function blocks, control loops may be established that are controlled in the field as opposed to being controlled by a controller.

Prior art DCS or distributed control systems collect loop characteristics and then typically determine tuning constants. The determined constant or constants are delivered to the field device and used by its function blocks to continue control. As the data is collected from the device the actual data collection during a scan or execution cycle can change due other events the DCS or controller must respond too. Measuring at the DCS reduces sampling precision.

SUMMARY

In some embodiments a field device for use in a distributed control system is provided. The field device comprises a Proportional/Integral/Derivative (PID) block configured to locally collect loop characteristics of a control loop in the distributed control system during a PID tuning cycle. The PID block is further configured to receive a new tuning constant for the PID block based on the collected loop characteristics.

In some embodiments a component for use in a distributed control system is provided. The component comprises a Proportional/Integral/Derivative (PID) tuning block configured to receive loop characteristics of a control loop in the distributed control system from a field device. The PID tuning block is further configured to calculate a new tuning constant for a PID controller on the field device. The PID tuning block is further configured to communicate the new tuning constant to the field device.

In some embodiments a Proportional/Integral/Derivative (PID) tuning method is provided. The PID tuning method comprises collecting loop characteristics of a control loop in a distributed control system during a PID tuning cycle by a PID block on a field device. The PID tuning method also comprises communicating the collected loop characteristics from the field device to a host computer in the distributed control system. The PID tuning method further comprises receiving a new tuning constant for the PID block from the host computer.

In another objective of the invention, tuning constants computed in the device instead of at the DCS, there is a difference of percentage points in gain, reset, rate, derivative that is an improvement in accuracy of the calculated constants. This difference is due to timing mismatch between the execution cycles of the device and DCS that cannot be removed from a control system simply because of the inherent delay in communication protocols for message translation, hardware response time, and network speeds to name a few.

These and other features will be more clearly understood from the following detailed description taken in conjunction with the accompanying drawings and claims.

BRIEF DESCRIPTION OF THE DRAWINGS

For a more complete understanding of the present disclosure, reference is now made to the following brief description, taken in connection with the accompanying drawings and detailed description, wherein like reference numerals represent like parts.

FIG. 1 illustrates an exemplary distributed control system.

FIG. 2 illustrates an exemplary functional block diagram of a Proportional/Integral/Derivative (PID) block.

FIG. 3 illustrates an exemplary functional block diagram of a PID controller.

FIG. 4 illustrates an exemplary PID tuning cycle.

FIG. 5 illustrates an exemplary flow diagram of the processing on a host during a PID tuning cycle.

FIG. 6 illustrates an exemplary flow diagram of the processing on a field device during a PID tuning cycle.

FIG. 7 illustrates an exemplary flow diagram of the processing on a field device to drive the output of a PID block and obtain loop characteristics during a PID tuning cycle.

FIG. 8 illustrates an exemplary computer system suitable for implementing the several embodiments of the disclosure.

FIG. 9 illustrates set point change in a process variable and the output measured for tuning constants, with the X-axis is the execution cycles and the Y-axis is a unit change of a signal.

FIG. 10 illustrates degrading sampling precision when sampling a constant loop characteristic by the first controller and at the device over a number of execution or scans of the distributed control system.

DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

Some distributed control systems may include field devices that are controlled by a controller. A control function provided by the controller may be a PID function that controls a control loop. PID control functions may need to be tuned occasionally. For example, PID control functions may suitably be adjusted or tuned as moving parts wear, as environmental conditions such as temperature or pressure vary, as control system electronics change such as from replacing components or as contact resistance changes, and as other changes occur in the controlled system. As part of the PID tuning operation, new tuning constants may be calculated for the PID control function. The new tuning constants may be calculated by the controller based on loop characteristics that may be collected during the PID tuning operation. The loop characteristics may be collected by driving the output of the PID control function to stimulate a process and measuring how the process responds to the stimulus (e.g., how quickly and by what magnitude does the process respond to the stimulus).

More recent distributed control systems have provided for control in the field devices themselves. By having control functionality in the field devices themselves, the control is more responsive in comparison to control provided by a controller. That is, by having control in the field devices there is less delay between when a change in a process variable occurs and when the change is detected by control functionality. Similarly, there is less delay between when a control output to adjust for the change in the process variable is supplied by the control functionality and when a field device acts on the control output. Similarly, in a PID tuning operation, by having the control on the field devices themselves, more accurate loop characteristics may be gathered and hence better tuning constants may be calculated. However, due to the complexity of the calculations required to calculate the tuning constants many field devices may not have sufficient computing resources to calculate new tuning constants in a timely manner.

Disclosed herein is a distributed control system whereby a PID tuning block on a host computer may cooperatively execute in conjunction with a PID block on a field device during a PID tuning cycle. The PID tuning block on the host may take advantage of the increased computing resources available on the host computer to calculate new tuning constants for the PID block. As discussed in more detail below, a PID tuning cycle may be initiated by the PID tuning block communicating a disturbance value to the PID block. The PID block on the field device may locally control the PID tuning cycle based on the supplied disturbance value to drive the output of the PID block and collect loop characteristics. The PID tuning block on the host computer may wait for the PID block on the field device to supply the collected loop characteristics. From the received loop characteristics, the PID tuning block on the host may calculate and supply new tuning constants to the PID block on the field device.

By having the PID block on the field device locally control the PID tuning cycle and collect the loop characteristics, more accurate values for the loop characteristics may be obtained due to the more responsive nature of the local control by the PID block on the field device. By having the PID tuning block at the host calculate the tuning constants, the increased computing resources available at the host may be taken advantage of to calculate the new tuning constants in a timely manner. Therefore, the disclosed PID tuning cycle takes advantage of both the responsive nature of control in the field by the PID block on the field device to collect better loop characteristics while at the same time relying on the PID tuning block on the host computer to perform the computationally intensive calculations to generate the new tuning constants based on the collected loop characteristics.

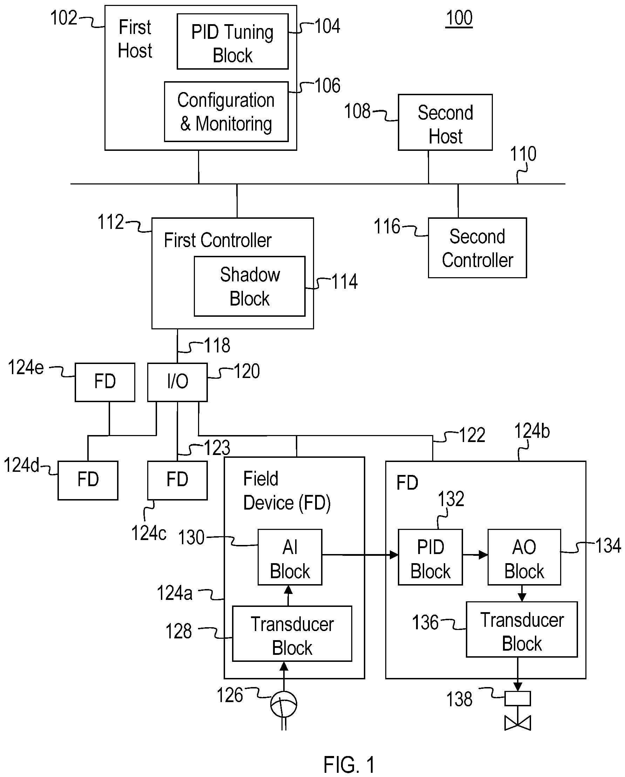

FIG. 1 illustrates an exemplary distributed control system 100. As shown in FIG. 1, the distributed control system 100 may include a first host 102, and a second host 108 coupled to a first controller 112 and a second controller 116 over a communications network 110. In some embodiments the communications network 110 may be an Ethernet local area network, a fiber optic network such as a SONET/SDH network, or any other proprietary, commercially available, or open standard wired or wireless network known to those of ordinary skill in the art. While illustrated as a bus architecture, the communications network 110 may take any form known to those of ordinary skill in the art, including a star architecture, a ring architecture, or a tree architecture, for example.

As shown in FIG. 1, the first controller 112 is coupled to a plurality of field devices 124a-124e (collectively referred to as field devices (FDs) 124) through an input/output (I/O) device 120. The FDs 124 may include any field device known to those of ordinary skill in the art such as temperature sensors, pressure sensors, valve actuators, positioners, etc. The first controller 112 may include any proprietary or commercially available distributed control system controller, such as Invensys CP-270. The first controller 112 is coupled to the I/O device 120 over a communications link 118. The communications link 118 may be a proprietary fiber optic communications link or any other proprietary, commercially available, or open standard wired or wireless network known to those of ordinary skill in the art. The I/O device 120 is in turn coupled to the FDs 124 over communication bus segments. For example, the I/O device 120 is shown to be coupled to field device (FD) 124a and FD 124b over the communication bus 122.

The I/O device 120 enables the first controller 112 to communicate with FDs 124 using one or more communication bus protocols. For example, the I/O device 120 may enable communication with FD 124a and FD 124b via communication bus 122 using a FOUNDATION™ Fieldbus communications protocol while enabling communication with FD 124c via communication bus 123 using a HART® communications protocol. Note that the communications link 118 may enable communications between the first controller 112 and the I/O device 120 at higher speeds relative to the communication bus segments that couple the I/O device 120 to the FDs 124. For example, whereas the communication bus 122 may operate at speeds around 31.25 kilobits/second, the communications link 118 may operate at speeds around 100 megabits/second or faster.

While FIG. 1 is illustrated with first controller 112 coupled to the FDs 124 through the I/O device 120, in some embodiments the first controller 112 may be directly coupled to the FDs 124 over the communication bus segments without the use of the I/O device 120. While FIG. 1 is illustrated with the first controller 112 and the I/O device 120 as separate components, in some embodiments the first controller 112 and the I/O device 120 may be integrated together. Also, while the I/O device 120 is illustrated as only being coupled to FDs 124, the I/O device 120 may be coupled to additional I/O devices (not shown) that in turn may be coupled to other field devices (not shown). Further, second controller 116 may similarly be coupled to field devices (not shown) in a manner similar to that described above with respect to first controller 112. Moreover, while the distributed control system 100 is shown with two hosts and two controllers, any number of these devices may be present in the distributed control system 100.

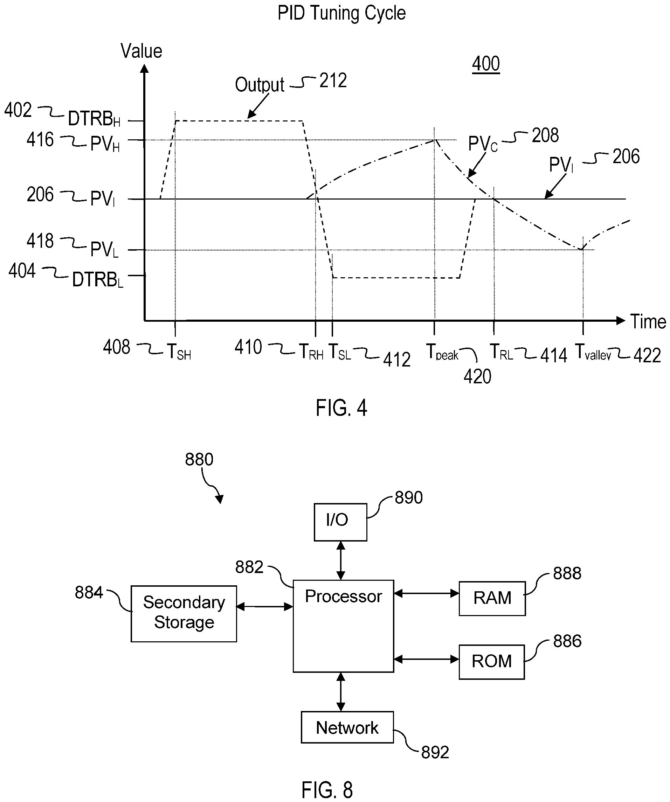

The first host 102 illustrated in FIG. 1 is shown to include a PID tuning block 104 and a configuration and monitoring application 106. The PID tuning block 104 and the configuration and monitoring application 106 may each be software installed on the first host 102 or otherwise embodied on a non-transitory computer readable medium of the first host 102. In some embodiments, one or both of the PID tuning block 104 and the configuration and monitoring application 106 may be implemented as an application specific integrated circuit or other hardware-based solution, as would be understood by those of ordinary skill in the art. The first host 102 may be a computer, such as a workstation computer, that includes various non-transitory computer readable media and a processor to execute the PID tuning block 104 and the control and monitoring application 106. Computers are discussed in more detail below with reference to FIG. 8.

While illustrated as separate elements in FIG. 1, the PID tuning block 104 and the configuration and monitoring application 106 may be integrated into a single application. For example, the PID tuning block 104 may be implemented as a plug-in of the configuration and monitoring application 106. In some embodiments, the configuration and monitoring application 106 is coded according to the Field Device Tool (FDT) software architecture, and the PID tuning block 104 is embodied as a device type manager (DTM) plug-in of the configuration and monitoring application 106. The FDT software architecture is an open framework that is independent of a specific host system or specific vendor. By encoding the PID tuning block 104 as a DTM plug-in, the PID tuning block 104 may be executed on any host system that has a configuration and monitoring application that supports the FDT software architecture. While not shown, the second host 108 may similarly include a configuration and monitoring application and a PID tuning block. In some embodiments the second host 108 may be from a different vender as first host 102.

The PID tuning block 104 cooperatively executes in conjunction with a PID block on a FD during a PID tuning cycle to calculate new tuning constants for the PID block. As shown in FIG. 1, the PID tuning block 104 may calculate the tuning constants for a PID block 132 on the FD 124b. As discussed in more detail below with reference to FIGS. 4-6, a PID tuning cycle may be initiated by the PID tuning block 104 communicating a disturbance value for the PID block 132 to output. The PID block 132 may locally control the PID tuning cycle based on the supplied disturbance value to collect loop characteristics. The PID tuning block 104 may wait for the PID block 132 to supply the loop characteristics of the control loop that includes the PID block 132. From the received loop characteristics, the PID tuning block 104 may calculate and supply new tuning constants to the PID block 132.

By having the PID block 132 locally control the PID tuning cycle and collecting the loop characteristics, more accurate values for the loop characteristics may be obtained due to the more responsive nature of the local control by the PID block 132. For example, in a typical PID tuning cycle controlled by a controller, such as first controller 112, additional delays are caused by the longer communication path from the first controller 112 to the sensor 126 and the actuator 138. However, the FD 124b on which the PID block 132 resides may not have sufficient computing resources to locally calculate the tuning constants in a timely manner. Accordingly, the PID tuning block 104 takes advantage of the increased computing resources available at the first host 102 to calculate the tuning constants. Therefore, the PID tuning cycle takes advantage of both the responsive nature of control in the field by the PID block 132 to collect better loop characteristics while at the same time relying on the PID tuning block 104 on the first host 102 to perform the computationally intensive calculations to generate the new tuning constants based on the collected loop characteristics.

The configuration and monitoring application 106 provides a graphical user interface (not shown) to a display of the first host 102 for viewing by and interaction with end-users. The configuration and monitoring application 106 may enable configuring elements of a control loop in the distributed control system 100. For example, the configuration and monitoring application 106 may provide a graphical user interface screen (not shown) that shows the elements of a control loop in a controlled process. The screen depicting the control loop may include graphical representations of the first host 102, the first controller 112, and one or more of the FDs 124, though more or fewer elements may be shown. For example, a PID control loop may include two field devices: a sensor that samples a process variable of a controlled process (e.g., temperature sensor, pressure sensor, flow sensor, or other sensor) and an actuator that physically manipulates an element of the controlled process (e.g., a valve actuator, positioner, or other actuator). The configuration and monitoring application 106 may enable a user to select any of the graphically depicted elements of the control loop to configure parameters of the selected element, perhaps through another screen of the graphical user interface. For example, the configuration and monitoring application 106 may enable an end-user to provide a set point, set alarm limits, or otherwise configure elements of a control loop in ways known to those of ordinary skill in the art.

The configuration and monitoring application 106 may also enable monitoring control loops that may be running in the distributed control system 100. For example, the configuration and monitoring application 106 may provide a screen of the graphical user interface (see, for example, FIG. 4, discussed in more detail below) that may show the values of a set point of a PID control loop, a process variable that is sampled by a field device in the PID control loop, and the output value of a PID block in a field device. The configuration and monitoring application 106 may monitor these values over time so as to identify and display trends to the end-user. For example, the configuration and monitoring application 106 may show whether and by how much a process variable is overshooting a set point, whether and by how much a process variable is oscillating about a set point, and other such trends or measurements of a control loop known to those of ordinary skill in the art.

The configuration and monitoring application 106 may further enable initiating and terminating control loops. For example, upon configuring elements of a control loop, the configuration and monitoring application 106 may enable an end-user to initiate controlling a process by the control loop. Similarly, the configuration and monitoring application 106 may enable an end-user to terminate controlling a process by the control loop. For example, in a PID tuning cycle, an end-user may terminate controlling a process by a control loop and switch to a process identification mode. A PID tuning cycle is discussed in more detail below with reference to FIGS. 4-7.

The first controller 112 illustrated in FIG. 1 is shown to include a shadow block 114. The shadow block 114 may be software or code installed on the first controller 112 or otherwise embodied on a tangible computer readable medium of the first controller 112. In some embodiments, the shadow block 114 may be implemented as an application specific integrated circuit or other hardware-based solution, as would be understood by those of ordinary skill in the art. The shadow block 114 locally replicates the details of an active control loop running in the field. By locally replicating the details of the active control loop, the shadow block may enable quick and efficient observation of the details of the active control loop without impacting or directly interacting with the active control loop in the field. In some embodiments the control and monitoring application 106 may communicate with the shadow block to enable monitoring of control loops rather than communicate directly with devices of the control loops in the field.

The FD 124a and 124b illustrated in FIG. 1 are shown to include various blocks for enabling a PID control loop. FD 124a is shown to include a transducer block 128 that enables sampling a process variable of a controlled process from a sensor 126. The sensor 126 may be a temperature sensor, pressure sensor, flow sensor, or other sensor known to those of ordinary skill in the art. The process variable that is sampled from the sensor 126 may be a temperature, pressure, flow, or other quantitative measurement of an element or condition of an element in the controlled process. The transducer block 128 may supply the value of the sampled process variable to an analog input (AI) block 130 on the FD 124a. The AI block 130 in turn supplies the value of the sampled process variable to PID block 132 on FD 124b.

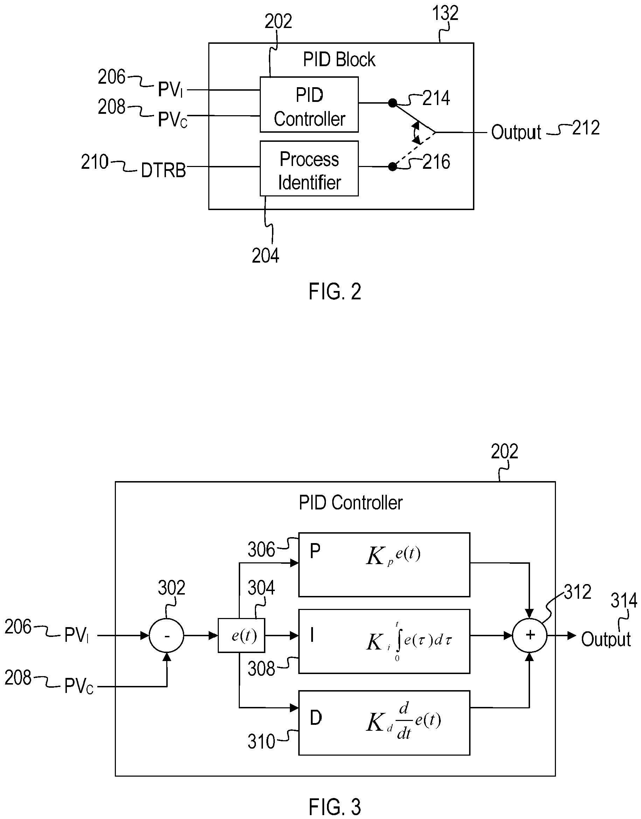

The PID block 132 may calculate a control output based on the value of the sampled process variable. PID control calculations are discussed in more detail below with reference to FIGS. 2 and 3. The PID block 132 may supply the control output to an analog output (AO) block 134 on FD 124b which in turn may supply the control output to a transducer block 136 on FD 124b. The transducer block 136 may use the control output in conjunction with the underlying hardware of the FD 124b to control an actuator 138 in the controlled process. The actuator 138 may be a valve actuator, positioner, or other actuator known to those of ordinary skill in the art.

While the FD 124a and FD 124b are illustrated in FIG. 1 to be on the same communication bus segment 122, in some embodiments FD 124a and FD 124b may be on different communication bus segments. Also, while the PID block 132 is shown to be on FD 124b, in some embodiments the PID block 132 may be on FD 124a.

FIG. 2 illustrates an exemplary functional block diagram of the PID block 132 shown in FIG. 1. As shown in FIG. 2, the PID block 132 may include a PID controller 202 and a process identifier 204. The PID block 132 has an output 212 that is selectable between a control output 214 of the PID controller 202 and a process identifier output, disturbance (DTRB) output 216, of the process identifier 204. The PID controller 202 may receive an initial value of a process variable ($PV_I$) input 206 and a current value of the process variable ($PV_C$) input 208 and calculate the control output 214. The calculation of the control output 214 by the PID controller 202 is discussed in more detail below with reference to FIG. 3.

The process identifier 204 may receive a disturbance (DTRB) input 210 and bypass the PID controller 202 so as to directly supply the DTRB input 210 as the DTRB output 216. In some embodiments the process identifier 204 may be as simple as a straight bypass connection between the DTRB input 210 to the DTRB output 216, though additional logic and/or circuitry may be present. The output 212 of the PID block 132 may be selected to output the control output 214 calculated by the PID controller 202 during normal operations of the control loop and selected to output the DTRB output 216 during a PID tuning cycle. PID tuning cycles are discussed in more detail below with reference to FIGS. 4-7. In some contexts the process identifier 204 may be referred to as a manual controller, the disturbance (DTRB) input 210 may be referred to as a manual control (MC) input 210, and the disturbance (DTRB) output 216 may be referred to as a manual control (MC) output 216.

FIG. 3 illustrates an exemplary functional block diagram of the PID controller 202. The PID controller 202 includes a subtraction module 302 that subtracts the value of the $PV_C$ input 208 from the value of the $PV_I$ input 206 to generate an error value 304, shown as error as a function of time e(t). The error value 304 is then supplied to each of a proportional (P) module 306, an integral (I) module 308, and a derivative (D) module 310.

The P module 306 may calculate a proportional control value by multiplying a proportional constant, $K_p$, by the error value 304 as shown below in equation 1.

$$P_{out} = K_p e(t) \qquad\qquad \text{equation (1),}$$

where $P_{out}$ is the output calculated by the P module 306, $K_p$ is the proportional constant, and $e(t)$ is the error value 304.

The I module 308 calculates an integral control value by integrating the error value 304 over time and multiplying that by an integration constant, $K_i$, as shown below in equation 2.

$$I_{out} = K_i \int_0^t e(\tau) d\tau \qquad\qquad \text{equation (2),}$$

where $I_{out}$ is the output calculated by the I module 308, $K_i$ is the integration constant, and $e(\tau)$ is the error value 304.

The D module 310 calculates a derivative control value by multiplying a derivative constant, $K_d$, by the derivative of the error value 304 over time as shown below in equation 3.

$$D_{out} = K_d \frac{d}{dt} e(t) \qquad\qquad \text{equation (3),}$$

where $D_{out}$ is the output calculated by the D module 310, $K_d$ is the derivative constant, and e(t) is the error value 304.

While the P module 306, the I module 308, and the D module 310 are described above as calculating $P_{out}$, $I_{out}$, and $D_{out}$ using equations (1)-(3) above, one of ordinary skill in the art will readily recognize that other equations may be used. For example, those of ordinary skill in the art will understand that more complex equations using additional or different terms may be used. In combination with the present disclosure, one skilled in the art will appreciate that while the PID controller 202 is represented in canonical form in terms of continuous time mathematical operations, the PID controller 202 may be implemented in terms of corresponding discrete time mathematical operations using well known numerical methods. Additionally, while the proportional function, the integration function, and the derivative function are represented in FIG. 3 as parallel operations, one skilled in the art would appreciate that these functions could alternatively be performed in series operations and/or combined operations.

The PID controller 202 includes an addition module 312 that adds the outputs from each of the P module 306, the I module 308, and the D module 310 to generate the output 314. In a PID tuning cycle, new values for each of the proportional constant, $K_p$, integration constant, $K_i$, and the derivative constant, $K_d$, are calculated and provided to the PID controller 202. The constants $K_p$, $K_i$, and $K_d$ may collectively be referred to herein as tuning constants or PID tuning constants. Tuning the PID controller 202 or tuning the PID block 132 includes adjusting the tuning constants $K_p$, $K_i$, and $K_d$ of the PID controller 202 to the new tuning constants that are calculated as a result of the PID tuning cycle.

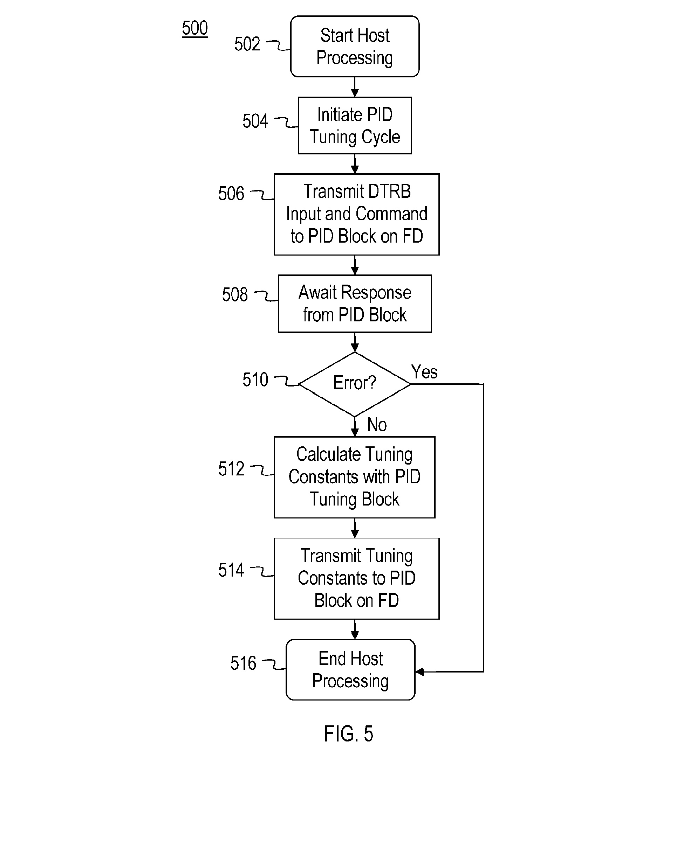

FIG. 4 illustrates an exemplary PID tuning cycle 400. As discussed briefly above, and discussed in more detail below in conjunction with FIGS. 5-7, a PID tuning cycle may be initiated by the PID tuning block 104. The PID tuning block 104 may supply a value for the DTRB input 210 and an instruction or command for the PID block 132 to switch to a process identification mode and implement a PID tuning cycle. As shown in FIG. 4, the process may initially be in a steady state where the $PV_C$ input 208 closely tracks the $PV_I$ input 206. Responsive to receiving the instruction from the PID tuning block 104, the PID block 132 may start the PID tuning cycle by driving the output 212 of the PID block 132 to the value supplied by the DTRB input 210. As shown in FIG. 4, the value supplied by the DTRB input 210 is a high disturbance ($DTRB_H$) value 402. The $DTRB_H$ value 402 may, for example, be expressed as a relative value based on the value of the set point (e.g., 5% over the set point) or as an absolute value.

The PID block 132 maintains the output 212 at the $DTRB_H$ value 402 until a change is detected in the process. The change in the process is detected based on the $PV_C$ input 208 exceeding the $PV_I$ input 206 by a threshold amount. For example, the PID block 132 may maintain the output 212 at the $DTRB_H$ value 402 until the $PV_C$ input 208 exceeds the $PV_I$ input 206 by a predetermined percentage (e.g., 0.5%) of the set point. Upon detecting the change in the process, the PID block 132 drives the output 212 by the same magnitude, but in the opposite direction from the set point. As shown in FIG. 4, the value of the output 212 is driven to a low disturbance ($DTRB_L$) value 404. For example, if the output 212 was driven to a value of 5% over the set point for the $DTRB_H$ value 402, then upon detecting the change in the process, the output 212 would be driven to set the $DTRB_L$ value 404 to 5% below the set point. The PID block 132 maintains the output 212 at the $DTRB_L$ value 404 for the same amount of time that the $DTRB_H$ value 402 was maintained.

Based on driving the output 212 as described above, loop characteristics that may be used to calculate new tuning constants may be determined by the PID block 132. The PID block 132 may determine a high stimulus time ($T_{SH}$) 408 when the output 212 has been driven to the $DTRB_H$ value 402 to stimulate the controlled process and a high response time ($T_{RH}$) 410 when the $PV_C$ input 208 has responded to the stimulus by exceeding the $PV_I$ input 206 by a threshold amount. Based on subtracting $T_{SH}$ 408 from $T_{RH}$ 410, the PID block 132 may determine how long the controlled process takes to respond to an increased stimulus.

Similarly, the PID block 132 may determine a low stimulus time ($T_{SL}$) 412 when the output 212 has been driven to the $DTRB_L$ value 404 and a low response time ($T_{RL}$) 414 when the $PV_C$ input 208 has responded to the stimulus after a peak or maximum value of $PV_C$ input 208 and is now back less than or equal to the $PV_I$ input 206. Based on subtracting $T_{SL}$ 412 from $T_{RL}$ 414, the PID block 132 may determine how long the controlled process takes to respond to a reduced stimulus.

While the above description of determining how long the controlled process takes to respond to an increased or reduced stimulus from the perspective of determining an absolute time when certain conditions are met, one of ordinary skill in the art would readily recognize that there may be alternative ways to determine how long the controlled process takes to respond to a stimulus. For example, rather than relying on an absolute time value, a timer may be started at time $T_{SH}$ 408 and the value of the timer may be read at time $T_{RH}$ 410. In this example, the value read from the timer may indicate how long the controlled process takes to respond to an increased stimulus. Similarly, a timer may be started at time $T_{SL}$ 412 and the value of the time may be read at time $T_{RL}$ 414.

The PID block 132 may also sample the value of the $PV_C$ input 208 so as to determine a maximum value or high value of the $PV_C$ input 208, hereinafter referred to as $PV_H$ value 416, based on driving the output 212 to the $DTRB_H$ value 402. The PID block 132 may determine and record a time $T_{peak}$ 420 when the $PV_C$ input 208 has reached the $PV_H$ value 416. The PID block 132 may also sample the value of the $PV_C$ input 208 so as to determine a minimum value or low value of the $PV_C$ input 208, hereinafter referred to as $PV_L$ value 418, based on driving the output 212 to the $DTRB_L$ value 404. The PID block 132 may determine and record a time $T_{valley}$ 422 when the $PV_C$ input 208 has reached the $PV_L$ value 418.

Those of ordinary skill in the art would readily recognize the various methods available for determining a maximum or minimum value of a sampled input. For example, when determining the $PV_H$ value 416, the PID block 132 may calculate a value of the difference between a currently sampled $PV_C$ input 208 and an immediately preceding sampled $PV_C$ input 208 and store the difference value in a log. The PID block 132 may store in the log at least two such difference values, where when a new difference value is calculated the oldest of the two currently stored difference values may be overwritten. The PID block 132 may determine the $PV_H$ value 416 when a difference between a currently calculated difference value and a previously calculated difference value is less than 0. The $PV_L$ value 418 may similarly be determined when a difference between a currently calculated difference value and a previously calculated difference value is greater than 0.

As another example, when determining the $PV_H$ value 416, the PID 132 block may simply store an initial value of the sampled $PV_C$ input 208. Upon taking a subsequent sample of the $PV_C$ input 208, the PID block 132 may perform a comparison to determine whether the currently sampled value of the $PV_C$ input 208 is larger than the currently stored value of the $PV_C$ input 208. For example, the comparison may be based on subtracting the currently stored valued of the $PV_C$ input 208 from the currently sampled value of the $PV_C$ input 208. When the sign of the difference is positive, then the currently sampled value of the $PV_C$ input 208 is larger than the currently stored value of the $PV_C$ input 208 and the currently sampled value of the $PV_C$ input 208 may be stored instead. If the sign of the difference is negative, then the currently sampled value of the $PV_C$ input 208 is less than the currently stored value of the $PV_C$ input 208 and it may be determined that the currently stored value of the $PV_C$ input 208 is the $PV_H$ value 416. The $PV_L$ value 418 may similarly be determined, but looking at whether a currently sampled value of the $PV_C$ input 208 is less than a currently stored value of the $PV_C$ input 208.

Upon obtaining the loop characteristics, the PID block 132 may communicate the loop characteristics to the PID tuning block 104. For example, the PID block 132 may communicate all of $PV_H$ 416, $PV_L$ 418, $T_{SH}$ 408, $T_{RH}$ 410, $T_{SL}$ 412, $T_{peak}$ 420, $T_{RL}$ 414, and $T_{valley}$ 422 to the PID tuning block 104. Alternatively, the PID block 132 may locally determine a difference between $T_{SH}$ 408 and $T_{RH}$ 410 and a difference between $T_{SL}$ and $T_{RL}$ and simply communicate the values of the differences to the PID tuning block 104 along with the values of $PV_H$ 416, $PV_L$ 418, $T_{peak}$ 420, and $T_{valley}$ 422. In a further alternative, when using a timer as described above, the value read from the time at time $T_{RH}$ 410 and $T_{RL}$ 414 may be communicated to the PID tuning block 104 along with the values of $PV_H$ 416, $PV_L$ 418, $T_{peak}$ 420, and $T_{valley}$ 422. The PID tuning block 104 may calculate new tuning constants based on the loop characteristics determined by the PID block 132 and the PID block 132 may be updated with the new tuning constants.

FIG. 5 illustrates an exemplary flow diagram of the processing 500 that may take place on the first host 102 during a PID tuning cycle. The processing on the first host 102 may be started at block 502. At block 504 the first host 102 may initiate a PID tuning cycle for a control loop. For example, the PID tuning cycle may be initiated for the control loop including the PID block 132. The configuration and monitoring application 106 may provide a graphical user interface (not shown) with a selectable option for initiating a PID tuning cycle for a control loop within the distributed control system 100. In response to selection of the selectable option by an end user, the configuration and monitoring application 106 may launch the PID tuning block 104. Alternatively, the first host 102 may enable an end user to directly launch the PID tuning block 104 to initiate a PID tuning cycle.

At block 506 the first host 102 transmits the DTRB input 210 to a PID block of the control loop. For example, the first host 102 may transmit the DTRB input 210 to the PID block 132 on the FD 124b. The DTRB input 210 may be transmitted along with a command for the PID block 132 to switch to process identification mode and collect loop characteristics based on the supplied DTRB input 210. The PID tuning block 104 may be running as a plug-in of the configuration and monitoring application 106 and the PID tuning block 104 may enable the configuration and monitoring application 106 to instruct the first host 102 to transmit the DTRB input 210 and the command. Alternatively, the PID tuning block 104 may directly instruct the first host 102 to transmit the DTRB input 210 and the command.

At block 508 the first host 102 awaits a response with loop characteristics from the PID block of the control loop. For example, the PID tuning block 104 and/or the configuration and monitoring application 106 may await the response from the PID block 132 with collected loop characteristics. Should the first host 102 not receive a response within a threshold period of time after transmitting the DTRB input 210, the PID tuning cycle may be timed out. If the PID tuning cycle is timed out, then the first host 102 may transmit a command or message to the PID block of the control loop to cancel any in-progress PID tuning cycle. At block 510 upon receiving a response from the PID block of the control loop, the first host 102 determines whether the response indicates that an error has occurred in the PID tuning cycle.

For example, either the PID tuning block 104 may indirectly receive the response through the configuration and monitoring application 106 or the PID tuning block 104 may directly receive the response. If it is determined that an error occurred in the PID tuning cycle at block 510, the processing on the first host 102 ends at block 516. If it is determined that an error did not occur in the PID tuning cycle at block 510, processing on the first host 102 continues to block 512.

In block 512 the first host 102 calculates new tuning constants for the PID block based on the loop characteristics received in the response from the PID block. For example, upon receiving the loop characteristics directly, the PID tuning block 104 may calculate new tuning constants for the PID block 132. In block 514 the first host 102 transmits the new tuning constants to the PID block in the control loop. For example, the first host 102 may transmit the new tuning constants to the PID block 132. The PID tuning block 104 may directly instruct the first host 102 to transmit the new tuning constants. Alternatively, the PID tuning block 104 may pass the new tuning constants to the configuration and monitoring application 106 which may in turn instruct the first host 102 to transmit the new tuning constants. At block 516 the processing on the first host 102 ends for the PID tuning cycle.

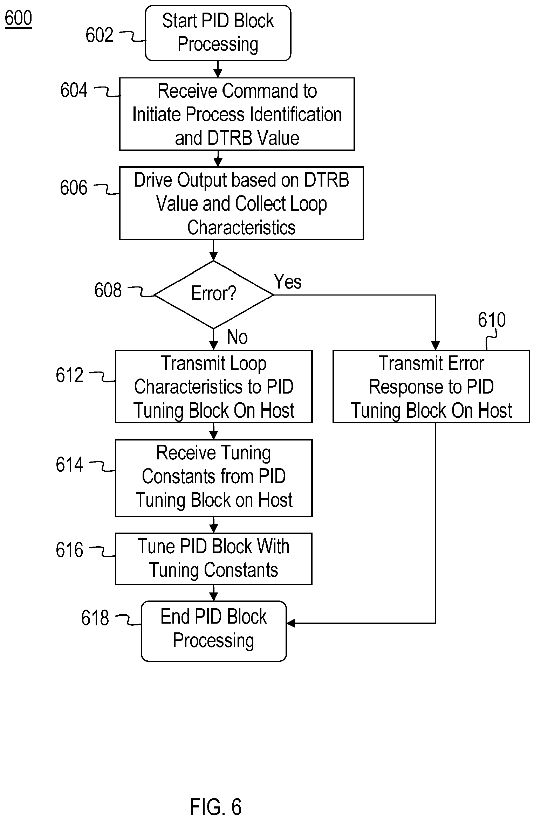

FIG. 6 illustrates an exemplary flow diagram of the processing 600 that may take place on a FD during a PID tuning cycle. At block 602 processing on the PID block starts. For example, the FD 124b may start processing the PID block 132. At block 604 the PID block 132 receives a command to initiate a process identification mode and receives the DTRB input 210. For example, the PID block 132 may receive the DTRB input 210 and the command to initiate process identification from the PID tuning block 104 on the first host 102.

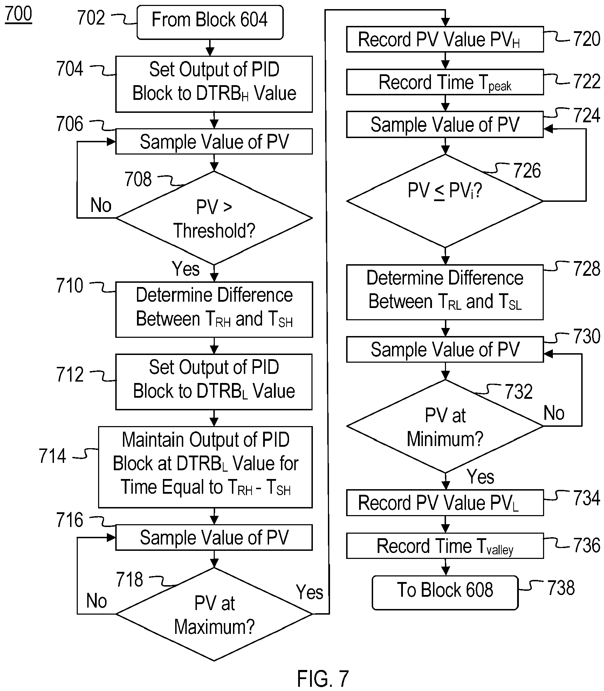

At block 606 the PID block 132 may drive the output 212 in a process identification mode based on the DTRB input 210 and collect loop characteristics. For example, the PID block 132 may collect the loop characteristics in the manner described above in conjunction with FIG. 4 and described in more detail with reference to FIG. 7 below. At block 608 the PID block 132 determines whether or not an error has occurred in driving the output and collecting loop characteristics. If it is determined in block 608 that an error has occurred, the PID block 132 transmits an error response to the PID tuning block 104 on the first host 102 at block 610 and processing on the PID block 132 ends at block 618. If it is determined in block 608 that an error has not occurred, processing on the PID block 132 continues at block 612.

At block 612 the PID block 132 transmits the collected loop characteristics to the PID tuning block 104 on the first host 102. At block 614 the PID block 132 receives the new tuning constants that were calculated by the PID tuning block 104 from the PID tuning block 104 on the first host 102. At 616 the PID block 132 tunes the PID controller 202 with the received tuning constants and switches out of the process identification mode. For example, the PID block 132 may switch so that the output 214 of the PID controller 202 is provided to the output 212. At block 618 the processing on the PID block 132 ends for the PID tuning cycle.

FIG. 7 illustrates an exemplary flow diagram of the processing 700 on a FD to drive the output of a PID block and obtain loop characteristics during a PID tuning cycle. For example, FIG. 7 illustrates an exemplary flow diagram of the processing by the PID block 132 during block 606 of FIG. 6. As shown in block 702, the processing by the PID block 132 may start from the end of the processing of block 604 in FIG. 6. At block 704 the PID block 132 may drive the output 212 to the $DTRB_H$ value 402 based on the DTRB input 210. That is, the PID block 132 may switch the output 212 to the DTRB output 216 of the process identifier 204.

At block 706 the PID block 132 may sample the value of the $PV_C$ input 208. At block 708 the PID block 132 determines whether the $PV_C$ input 208 has exceeded the $PV_1$ input 206 by a threshold amount. If the PID block 132 determines that the $PV_C$ input 208 has not exceeded the $PV_1$ input 206 by the threshold amount, the PID block 132 samples the value of the $PV_C$ input 208 again at block 706. If the PID block 132 determines that the $PV_C$ input 208 exceeds the $PV_I$ input 206 by the threshold amount then processing by the PID block 132 may continue to block 710.

At block 710 the PID block 132 determines the difference between $T_{SH}$ 408 and $T_{RH}$ 410. As described above in conjunction with FIG. 4, the PID block 132 may determine this difference based on determining a time at each of $T_{RH}$ 410 and $T_{SH}$ 408 and subtracting the time sampled at $T_{SH}$ 408 from the time sampled at $T_{RH}$ 410. Alternatively, the PID block 132 may start a timer at $T_{SH}$ 408 and read the value of the timer at time $T_{RH}$ 410. One of ordinary skill in the art will readily recognize that any other method of determining the difference between $T_{SH}$ 408 and $T_{RH}$ 410 may be used.

At block 712 the PID block 132 may drive the output 212 to the $DTRB_L$ value 404 based on the DTRB input 210. At block 714 the PID block 132 maintains the output 212 at the $DTRB_L$ value 404 for an amount of time equal to the difference between $T_{SH}$ 408 and $T_{RH}$ 410. At block 716 the PID block 132 may sample the value of the $PV_C$ input 208. At block 718 the PID block 132 determines whether the $PV_C$ input 208 has reached a maximum value. As described above in conjunction with FIG. 4, the maximum value may be determined in any manner known to those of ordinary skill in the art. If the PID block 132 determines that the $PV_C$ input 208 has not reached a maximum value, the PID block 132 samples the value of the $PV_C$ input 208 again at block 716. If the PID block 132 determines that the $PV_C$ input 208 has reached a maximum value then processing by the PID block 132 may continue to block 720. At block 720 the PID block 132 records the maximum value of the $PV_C$ input 208 as the $PV_H$ value 416. At block 722 the PID block 132 records the time the $PV_C$ input 208 reached the $PV_H$ value 416 as time $T_{peak}$ 420.

At block 724 the PID block 132 may sample the value of the $PV_C$ input 208. At block 726 the PID block 132 determines whether the $PV_C$ input 208 has dropped back to less than or equal to the value of the $PV_I$ input 206. If the PID block 132 determines that the $PV_C$ input 208 has not dropped back to less than or equal to the value of the $PV_I$ input 206, the PID block 132 samples the value of the $PV_C$ input 208 again at block 724. If the PID block 132 determines that the $PV_C$ input 208 has dropped back to less than or equal to the value of the $PV_I$ input 206, then processing by the PID block 132 may continue to block 728. At block 728 the PID block 132 determines the difference between $T_{SL}$ 412 and $T_{RL}$ 414.

At block 730 the PID block 132 may sample the value of the $PV_C$ input 208. At block 732 the PID block 132 determines whether the $PV_C$ input 208 has reached a minimum value. If the PID block 132 determines that the $PV_C$ input 208 has not reached a minimum value, the PID block 132 samples the value of the $PV_C$ input 208 again at block 730. As described above in conjunction with FIG. 4, the minimum value may be determined in any manner known to those of ordinary skill in the art. If the PID block 132 determines that the $PV_C$ input 208 has reached a minimum value then processing by the PID block 132 may continue to block 734. At block 734 the PID block 132 records the minimum value of the $PV_C$ input 208 as the $PV_L$ value 418. At block 736 the PID block 132 records the time the $PV_C$ input 208 reached the $PV_L$ value 418 as time $T_{valley}$ 422. At block 738 processing by the PID block may continue to block 608 as described above in connection with FIG. 6.

While some of the blocks of FIG. 7 are shown to be implemented serially, some of the blocks may be implemented in parallel. For example, blocks 712 and 714 may be implemented in parallel with blocks 716-720. Blocks 716-720 may also be implemented in parallel with blocks 722-726. While the above disclosure was directed primarily toward tuning PID control loops, the above disclosure may be equally applied to PI or P control loops as would be readily recognizable to those of ordinary skill in the art.

FIG. 8 illustrates a computer system 880 suitable for implementing one or more embodiments disclosed herein. For example, the computer system 880 may be suitable for implementing the first host 102, the second host 108, the first controller 112, the second controller 116, the I/O 120 or any of the FDs 124. The computer system 880 includes a processor 882 (which may be referred to as a central processor unit or CPU) that is in communication with memory devices including secondary storage 884, read only memory (ROM) 886, random access memory (RAM) 888, input/output (I/O) devices 890, and network connectivity devices 892. The processor 882 may be implemented as one or more CPU chips.

It is understood that by programming and/or loading executable instructions onto the computer system 880, at least one of the CPU 882, the RAM 888, and the ROM 886 are changed, transforming the computer system 880 in part into a particular machine or apparatus having the novel functionality taught by the present disclosure. It is fundamental to the electrical engineering and software engineering arts that functionality that can be implemented by loading executable software into a computer can be converted to a hardware implementation by well known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

The secondary storage 884 is typically comprised of one or more disk drives or tape drives and is used for non-volatile storage of data and as an over-flow data storage device if RAM 888 is not large enough to hold all working data. Secondary storage 884 may be used to store programs which are loaded into RAM 888 when such programs are selected for execution. The ROM 886 is used to store instructions and perhaps data which are read during program execution. ROM 886 is a non-volatile memory device which typically has a small memory capacity relative to the larger memory capacity of secondary storage 884. The RAM 888 is used to store volatile data and perhaps to store instructions. Access to both ROM 886 and RAM 888 is typically faster than to secondary storage 884. The secondary storage 884, the RAM 888, and/or the ROM 886 may be referred to in some contexts as non-transitory storage and/or non-transitory computer readable media.

I/O devices 890 may include printers, video monitors, liquid crystal displays (LCDs), touch screen displays, keyboards, keypads, switches, dials, mice, track balls, voice recognizers, card readers, or other well-known input devices.

The network connectivity devices 892 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA), global system for mobile communications (GSM), long-term evolution (LTE), worldwide interoperability for microwave access (WiMAX), and/or other air interface protocol radio transceiver cards, and other well-known network devices. These network connectivity devices 892 may enable the processor 882 to communicate with the Internet or one or more intranets. With such a network connection, it is contemplated that the processor 882 might receive information from the network, or might output information to the network in the course of performing the above-described method steps. Such information, which is often represented as a sequence of instructions to be executed using processor 882, may be received from and outputted to the network, for example, in the form of a computer data signal embodied in a carrier wave.

Such information, which may include data or instructions to be executed using processor 882 for example, may be received from and outputted to the network, for example, in the form of a computer data baseband signal or signal embodied in a carrier wave. The baseband signal or signal embodied in the carrier wave generated by the network connectivity devices 892 may propagate in or on the surface of electrical conductors, in coaxial cables, in waveguides, in an optical conduit, for example an optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, may be generated according to several methods well known to one skilled in the art. The baseband signal and/or signal embedded in the carrier wave may be referred to in some contexts as a transitory signal.

The processor 882 executes instructions, codes, computer programs, scripts which it accesses from hard disk, floppy disk, optical disk (these various disk based systems may all be considered secondary storage 884), ROM 886, RAM 888, or the network connectivity devices 892. While only one processor 882 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 884, for example, hard drives, floppy disks, optical disks, and/or other device, the ROM 886, and/or the RAM 888 may be referred to in some contexts as non-transitory instructions and/or non-transitory information.

In an embodiment, the computer system 880 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 880 to provide the functionality of a number of servers that is not directly bound to the number of computers in the computer system 880. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein implementing the functionality disclosed above. The computer program product may comprise data, data structures, files, executable instructions, and other information. The computer program product may be embodied in removable computer storage media and/or non-removable computer storage media. The removable computer readable storage medium may comprise, without limitation, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 880, at least portions of the contents of the computer program product to the secondary storage 884, to the ROM 886, to the RAM 888, and/or to other non-volatile memory and volatile memory of the computer system 880. The processor 882 may process the executable instructions and/or data in part by directly accessing the computer program product, for example by reading from a CD-ROM disk inserted into a disk drive peripheral of the computer system 880. The computer program product may comprise instructions that promote the loading and/or copying of data, data structures, files, and/or executable instructions to the secondary storage 884, to the ROM 886, to the RAM 888, and/or to other non-volatile memory and volatile memory of the computer system 880.

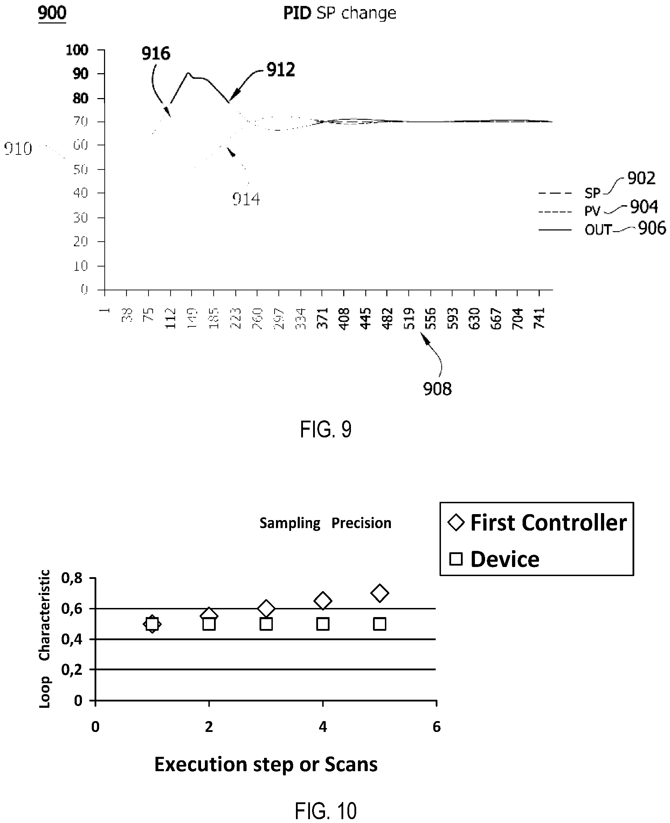

Referring to FIG. 9, a graphic of the variable response to a set point change 900 is shown. The graphic 900 plots measure value 910 normalized from 0 to 100 on the Y or vertical axis, and an execution cycle 908 of a control system is shown on the X or horizontal axis. The set point 902, 916 is increase by 20 units 916 from 50 to 70. The output 906, 912 of a device being controlled changes in response to the set point change. The process variable 904, 914 being controller changes or increases in response to the set point change.

In a control system, the time or number of execution cycles depends on the accuracy of tuning constants.

Referring to the table below, computing in a device tuning constants gain 1000, reset 1002, rate 1004, Kderivative 1006 and SP_LL 1008 versus computed in a DCS device shows a difference of over 2 percentage points in the process gain 1000 or about 2.2%. Also the difference increases to over three percentage points in the process gain 1000 when tuning two devices from within the DCS. The increase in process gain 1000 using the DCS device is due to the timing mismatch between the device being tuned and the DCS device performing the tuning. As shown in FIG. 9 the PV 904, 914 over shoots the SP 902, 916 before the PV settles at the new SP 902. The increase in process gain 1000 caused the greater over shoot. By computing the tuning constants in the device the over shoot is reduced allowing the system to reach set point (SP) more quickly and there is less chance the system would get out of control.

Table I. Tuning Constants in Device vs. at DCS

|  | Gain | Reset | Rate |
|---|---|---|---|
| Device | 001.7674 | 040.3510 | 009.7165 |
| DCS | 001.8068 | 040.5495 | 010.0466 |
| % Increase | 2.2% | 0.49 | 0.079 |

Referring to FIG. 10, a plot of the first controller 112 measuring loop characteristics over time from the PID block 132. The same loop characteristics are measured at the field device 124. FIG. 10 depicts the degrading sampling precision by the first controller over a number of execution scans as shown at the X-axis. By contrast the device 124 can measure the loop characteristic over time repeatedly with the accuracy of the measuring sensor. For FIG. 10 it is assumed the loop characteristic is constant at 0.50 units of characteristic. The point is the device 124 can measure more precisely the characteristic value because the device is not subject to propagation delay or answering other service or events as does the first controller 112. Once the characteristics are measured the data is communicated to the first host 102 or external device to determine the tuning constants.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

Accordingly the invention may also relate to a system and a method for implementing a Proportional/Integral/Derivative (PID) tuning cycle in a distributed control system comprising a PID block on a field device collecting loop characteristics of a control loop. The PID block may communicate the collected loop characteristics from the field device to a host computer in the distributed control system. The host computer may calculate a new tuning constant based on the received loop characteristics and communicate the new tuning constant to the PID block on the field device. The PID block on the field device may receive the new tuning constant for the PID block from the host computer. The PID block on the field device may be tuned with the new tuning constant.

**Claims**

1. Field device for use in a distributed control system, comprising:

    a proportional/integral/derivative (PID) block located and configured at the device to locally collect loop characteristics of a control loop in the distributed control system during a proportional/integral/derivative tuning cycle, and wherein the proportional/integral/derivative block is further configured to communicate the collected loop characteristics to a first host of the distributed control system external to the field device.

2. Field device according to claim 1, wherein the new tuning constant for the proportional/integral/derivative block is received from the component of the distributed control system external to the field device.

3. Field device according to claim 2, wherein the component of the distributed control system is a host computer in the distributed control system.

4. Field device according to claim 2 or 3, wherein the proportional/integral/derivative block is further configured to receive a disturbance input from the component of the distributed control system external to the field device and to drive an output of the proportional/integral/derivative block during the proportional/integral/derivative tuning cycle based on the received disturbance input.

5. Field device according to claim 4, wherein the proportional/integral/derivative block is further configured to receive a command to initiate the proportional/integral/derivative tuning cycle and to drive the output of the proportional/ integral/derivative block during the proportional/integral/derivative tuning cycle responsive to receiving the command.

6. Field device according to claim 5, wherein the disturbance input and the command are received from the component of the distributed control system external to the field device.

7. Component for use in a distributed control system, comprising:

a proportional/integral/derivative (PID) tuning block located and configured to receive loop characteristics of a control loop in the distributed control system from a field device, configured to calculate a new tuning constant for a proportional/integral/derivative controller on the field device, and configured to communicate the new tuning constant to the field device.

8. Component according to claim 7, wherein the loop characteristics are collected by a proportional/integral/derivative block on the field device and the new tuning constant is communicated to the proportional/integral/derivative block on the field device.

9. Component according to claim 8, wherein the proportional/integral/derivative tuning block is further configured to communicate a command to the field device to initiate a proportional/integral/derivative tuning cycle to collect the loop characteristics.

10. Component according to claim 9, wherein the proportional/integral/derivative tuning block is further configured to communicate a disturbance input to the field device for use by the field device during the proportional/integral/ derivative tuning cycle.

11. Component according to any of claims 7 to 10, wherein the component is a host computer in the distributed control system.

12. Component according to any of claims 7 to 11, wherein the proportional/integral/derivative tuning block is installed on the component as a plug-in to a configuration and monitoring application installed on the host computer.

13. Proportional/integral/derivative (PID) tuning method, comprising:

collecting loop characteristics of a control loop in a distributed control system during a proportional/integral/ derivative tuning cycle by a proportional/integral/derivative block located on a field device;
communicating the collected loop characteristics from the field device to a host computer in the distributed control system; and
receiving a new tuning constant for the proportional/integral/derivative block from the host computer.

14. Proportional/integral/derivative tuning method according to claim 13, further comprising:

receiving a disturbance input from the host computer; and
driving an output of the proportional/integral/derivative block during the proportional/integral/derivative tuning cycle based on the received disturbance input.

15. Proportional/integral/derivative tuning method according to claim 13 or 14, further comprising:

receiving a command to initiate the proportional/integral/derivative tuning cycle from the host computer,
wherein driving the output of the proportional/integral/derivative block is done responsive to receiving the command.

FIG. 1

202

132

PID Block

206 — PV$_I$

208 — PV$_C$

PID
Controller

214

Output — 212

210 — DTRB

Process
Identifier

216

204

FIG. 2

202

PID Controller

306

P

$K_p e(t)$

304

302

312

314

206 — PV$_I$

−

$e(t)$

I

$K_i \int_0^t e(\tau)d\tau$

+

Output

308

208 — PV$_C$

310

D

$K_d \dfrac{d}{dt} e(t)$

FIG. 3

PID Tuning Cycle

FIG. 4

FIG. 8

500

502 — Start Host Processing

504 — Initiate PID Tuning Cycle

506 — Transmit DTRB Input and Command to PID Block on FD

508 — Await Response from PID Block

510 — Error? — Yes

No

512 — Calculate Tuning Constants with PID Tuning Block

514 — Transmit Tuning Constants to PID Block on FD

516 — End Host Processing

FIG. 5

600

602 — Start PID Block Processing

604 — Receive Command to Initiate Process Identification and DTRB Value

606 — Drive Output based on DTRB Value and Collect Loop Characteristics

608 — Error?

Yes

610

No

612 — Transmit Loop Characteristics to PID Tuning Block On Host

Transmit Error Response to PID Tuning Block On Host

614 — Receive Tuning Constants from PID Tuning Block on Host

616 — Tune PID Block With Tuning Constants

618 — End PID Block Processing

FIG. 6

FIG. 7

**900**                          PID SP change

FIG. 9

Sampling Precision

◇ **First Controller**
□ **Device**

**Execution step or Scans**

FIG. 10